# EUROPEAN PATENT APPLICATION

(11) **EP 3 971 542 A1**
(43) Date of publication of application: **23.03.2022**
(21) Application number: 20806320.6
(22) Date of filing: 03.01.2020
(51) Int. Cl.: G01J 3/28, G01J 3/02

(54) **MANUFACTURING METHOD OF IMAGING SPECTROMETER HAVING CONVEX GRATING**

(30) Priority: 14.05.2019 CN 201910399688
(71) Applicant: Yusense Information Technology and Equipment (Qingdao) Inc., Qingdao, Shandong 266000 (CN)
(72) Inventor: ZHANG, Junqiang, Qingdao, Shandong 266000 (CN); YANG, Bin, Qingdao, Shandong 266000 (CN); LI, Xianfeng, Qingdao, Shandong 266000 (CN); XIN, Jiuyuan, Qingdao, Shandong 266000 (CN)
(74) Representative: SONN Patentanwälte OG
(86) International application number: PCT/CN2020/070246
(87) International publication number: WO 2020/228361

(57) **Abstract**

A manufacturing method of an imaging spectrometer having a convex grating comprising: taking a grating spherical surface vertex and a grating optical axis as processing datums for a convex grating assembly; taking a reflector spherical surface vertex and a reflector optical axis as processing datums for a reflector assembly; and using same to perform processing on a grating installation surface and the reflector assembly, such that distances between a reflector optical surface and a convex grating optical surface and respective installation surfaces of installation bases corresponding thereto meet design requirements, and the reflector optical surface and the reflector optical axis are perpendicular to each other. When the convex grating or the reflector requires adjustment, the adjustment only requires two degrees of freedom of horizontal movement parallel to the reflector installation surface and an angle within the plane. Since the number of the degrees of freedom to be adjusted decreases from six to three, difficulties of assembling an imaging spectrometer having a convex grating are minimized.

## Description

This application claims priority to Chinese Patent Application No. 201910399688.8, titled "METHOD FOR MANUFACTURING CONVEX GRATING IMAGING SPECTROMETER", filed on May 14, 2019, with the China National Intellectual Property Administration, which is incorporated herein by reference in its entirety.

### FIELD

The present disclosure relates to the technical field of optical instruments, and in particular, to a method for manufacturing a convex grating imaging spectrometer.

### BACKGROUND

A convex grating imaging spectrometer is a typical solid-state linear array push-broom spectrometer, which has an optical system developed on the basis of a concentric three-reflecting-mirror imaging optical system, and adopts an off-axis three-reflecting-convex-grating spectroscopical structure based on the Offner concentric structure by setting an appropriate off-axis quantity. The convex grating imaging spectrometer has the advantages of small spectral line curvature and color distortion, no astigmatism, simple structure, no moving parts, etc., and has broad applications in many fields such as military reconnaissance, resource exploration, natural disaster monitoring, environmental pollution assessment, medical diagnosis, etc.

The existing convex grating imaging spectrometer is usually assembled by the interferometric method, which combines the basic principle of double-beam interference with the basic characteristics of a concentric optical system. In practical operations, optical elements are fixed on a high-precision six-dimensional adjusting bracket for high-precision adjustment. And after the adjustment, an adjusting spacer between the optical element and the bracket is adjusted to achieve micron-level size and surface accuracy, to ensure a spatial position of the optical element. This process often requires multiple iterations and cooperation of experienced grinding technicians, which is very time-consuming and cannot meet the requirements of industrialized mass production.

Therefore, an urgent problem to be solved currently may be how to simplify the assembly process of the convex grating imaging spectrometer.

### SUMMARY

An objective of the present disclosure is to provide a method for manufacturing a convex grating imaging spectrometer, which adopts unified design reference, processing reference and assembly reference to process a reflector mounting surface, thereby reducing the degree of freedom of reflector adjustment during the mounting process, and simplifying the assembly process.

To achieve the above objective, a method for manufacturing a convex grating imaging spectrometer is provided according to the present disclosure, which includes:
processing a grating mounting surface and a reflector mounting surface on a spectrometer frame;
chucking a convex grating assembly, where the convex grating assembly includes a convex grating and a grating seat, and obtaining current positions of a grating spherical vertex and a grating optical axis of the convex grating;
processing a grating seat mounting surface by using the grating optical axis as a rotation axis and the grating spherical vertex as a reference point;
chucking a reflector assembly, determining a reflector optical axis and a reflector spherical vertex of the reflector assembly, and processing the reflector assembly by using the reflector optical axis as a rotation axis and the reflector spherical vertex as a reference point;
mounting a spectrometer component on the spectrometer frame;
adjusting and fixing a position of the convex grating assembly or the reflector assembly;
mounting a detector assembly on the spectrometer frame; and
completing a manufacturing process of the convex grating imaging spectrometer.

Preferably, in a case that the reflector assembly is a metal reflector, the processing the reflector assembly includes: processing a reflector optical surface and a mounting reference surface of the metal reflector.

Preferably, in a case that the reflector assembly is a glass reflector, the processing the reflector assembly includes: processing a mounting reference surface of the glass reflector.

Preferably, the spectrometer component includes: a telescope assembly, a slit assembly, and a light reflector assembly, and the light reflector assembly includes a light reflector mounting seat and a light reflector located in the light reflector mounting seat for reflecting incident light toward the reflector assembly.

Preferably, the adjusting and fixing a position of the convex grating assembly or the reflector assembly includes:
arranging a microscope at a preset position above a light exit hole of the spectrometer frame;
illuminating the telescope assembly with monochromatic light, and observing a monochromatic spectrum line imaged with the monochromatic light through the microscope; and
selecting one of the convex grating assembly and the reflector assembly as an adjusting reference, and moving the other along a mounting surface of the other and/or rotating the other around a normal of a mounting surface of the adjusting reference, until a clear monochromatic spectrum line is observed in the microscope, and fixing the convex grating assembly and the reflector assembly.

Preferably, the mounting a detector assembly on the spectrometer frame includes:
pre-mounting the detector assembly on the spectrometer frame;
illuminating a target in front of the telescope assembly with monochromatic light of different wavelengths;
adjusting a position of the detector assembly in a case that the target is not clearly imaged on the detector assembly, and repeating the step of illuminating the target in front of the telescope assembly with monochromatic light of different wavelengths; and
fixing the detector assembly in a case that the target is clearly imaged on the detector assembly under illumination of all the monochromatic light of different wavelengths.

Preferably, the target is a collimator target.

Preferably, after fixing the detector assembly, the method further includes: performing imaging verification on the convex grating imaging spectrometer.

In related art, the adjustment of a convex grating or a reflector includes three translations and three rotations, that is, six degrees of freedom in total. Thus a high-precision six-dimensional adjusting bracket is required for the adjustment, which results in a complicated adjustment process and therefore a complicated manufacturing process of the convex grating imaging spectrometer.

In the method for manufacturing a convex grating imaging spectrometer according to the present disclosure, first, a grating mounting surface and a reflector mounting surface are processed to a design value on a spectrometer frame; a convex grating assembly is chucked, and the convex grating assembly includes a convex grating and a grating mounting seat, and positions of a grating spherical vertex and a grating optical axis of the convex grating are obtained; then a grating seat mounting surface is processed to a design value by using the grating optical axis as a rotation axis and the grating spherical vertex as a reference point; a reflector assembly is chucked, a reflector spherical vertex and a reflector optical axis of the reflector are obtained, and the reflector assembly is processed to a design value by using the reflector optical axis as a rotation axis and the reflector spherical vertex as a reference point. Thereafter, the convex grating assembly, the reflector assembly, and a spectrometer component are mounted on the spectrometer frame, and a mounting position of the convex grating assembly or the reflector assembly is adjusted. Finally, a detector assembly is mounted on the spectrometer frame, and a manufacturing process of the convex grating imaging spectrometer is completed.

According to the present disclosure, the grating mounting surface and the reflector mounting surface of the spectrometer frame are processed first, such that dimensions and geometric tolerances of the two meet design requirements. The grating mounting surface and the reflector assembly are processed by using optical axis and spherical vertex of respective ones of the convex grating and the reflector as processing references, such that dimensions and geometric tolerances of an optical surface and the mounting surface of the reflector, and dimensions and geometric tolerances of an optical surface and the mounting surface of the convex grating meet design requirements. When the reflector assembly and the convex grating assembly are mounted on the reflector mounting surface and the grating mounting surface respectively, a distance between the optical surface of the reflector and the spherical vertex of the convex grating, and an angle between the optical surface of the reflector and the optical axis of the convex grating meet design requirements. In this way, during adjusting of the convex grating or the reflector, only two translational degrees of freedom parallel to the reflector mounting surface and an angle in this plane need to be adjusted. Thus the degree of freedom of adjustment is reduced from 6 to 3, thereby greatly reducing the difficulty of assembling the convex grating imaging spectrometer.

### BRIEF DESCRIPTION OF THE DRAWINGS

In order to more clearly illustrate technical solutions in embodiments of the present disclosure or in the conventional technology, drawings used in the description of the embodiments or the conventional technology are introduced briefly hereinafter. Apparently, the drawings described in the following illustrate some embodiments of the present disclosure; other drawings may be obtained by those ordinarily skilled in the art based on these drawings without any creative efforts.
Figure 1 is a flow chart according to a first embodiment of the present disclosure;
Figure 2 is a flow chart according to a second embodiment of the present disclosure;
Figure 3 is a cross-sectional view of a convex grating imaging spectrometer;
Figure 4 is a structural schematic diagram of an upper end surface of a spectrometer frame;
Figure 5 is a structural schematic diagram of a lower end surface of a spectrometer frame;
Figure 6 is a structural schematic diagram of a convex grating assembly;
Figure 7 is a structural schematic diagram of a glass reflector;
Figure 8 is a structural schematic diagram of a metal reflector; and
Figure 9 is a schematic diagram of adjusting a position of a convex grating or a reflector.

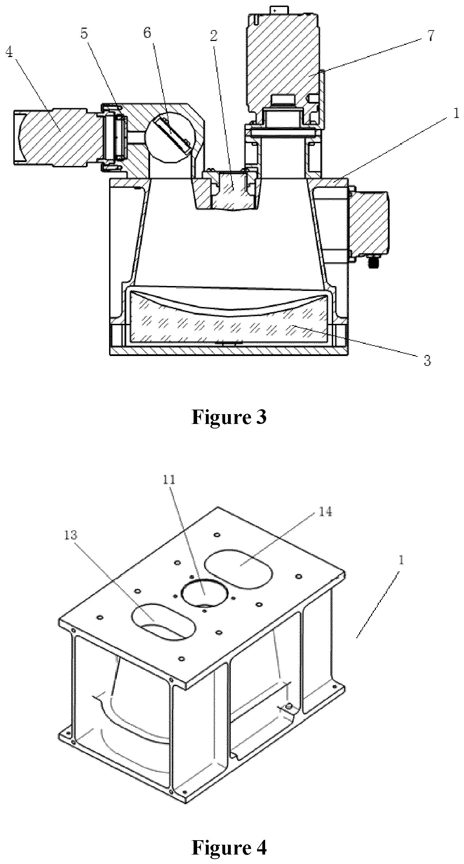

Numeral references in Figures 3 to 9:

| | | | | | |
|---|---|---|---|---|---|
| 1- | spectrometer frame | 2- | convex grating assembly | 3- | reflector assembly |
| 4- | telescope assembly | 5- | slit assembly | 6- | light reflector assembly |
| 7- | detector assembly | 11- | convex grating mounting hole | | |
| 12- | reflector mounting hole | 13- | light entrance hole | 14- | light exit hole |
| 21- | optical axis of convex grating | 22- | grating spherical vertex | | |
| 31- | reflector optical surface | 32- | mounting reference surface | | |
| 33- | reflector optical axis | 34- | reflector spherical vertex | | |

### DETAILED DESCRIPTION

The technical solutions in the embodiments of the present disclosure will be described clearly and completely hereinafter in conjunction with the drawings in the embodiments of the present disclosure. Apparently, the described embodiments are only a part of the embodiments of the present disclosure, rather than all embodiments. Based on the embodiments in the present disclosure, all of other embodiments, made by the person skilled in the art without any creative efforts, fall into the scope of protection of the present disclosure.

To enable the person skilled in the art to better understand the technical solutions of the present application, the present disclosure will be described in further detail hereinafter in conjunction with the drawings and some embodiments.

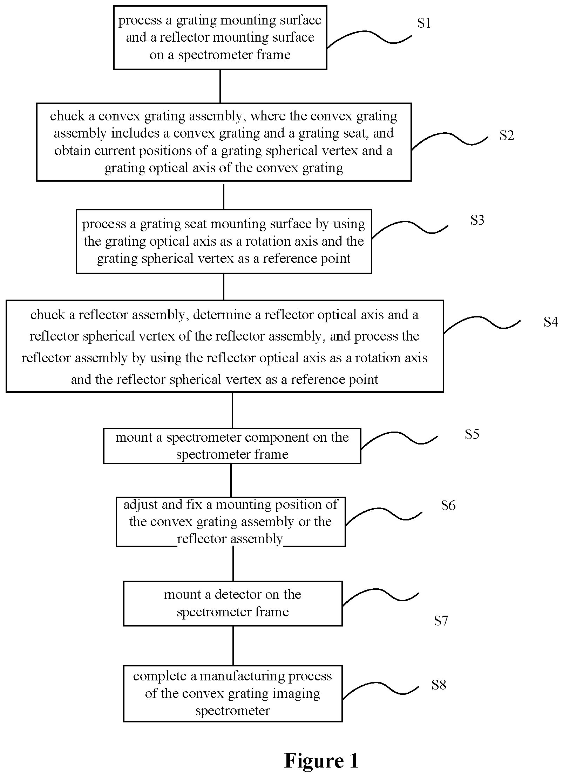

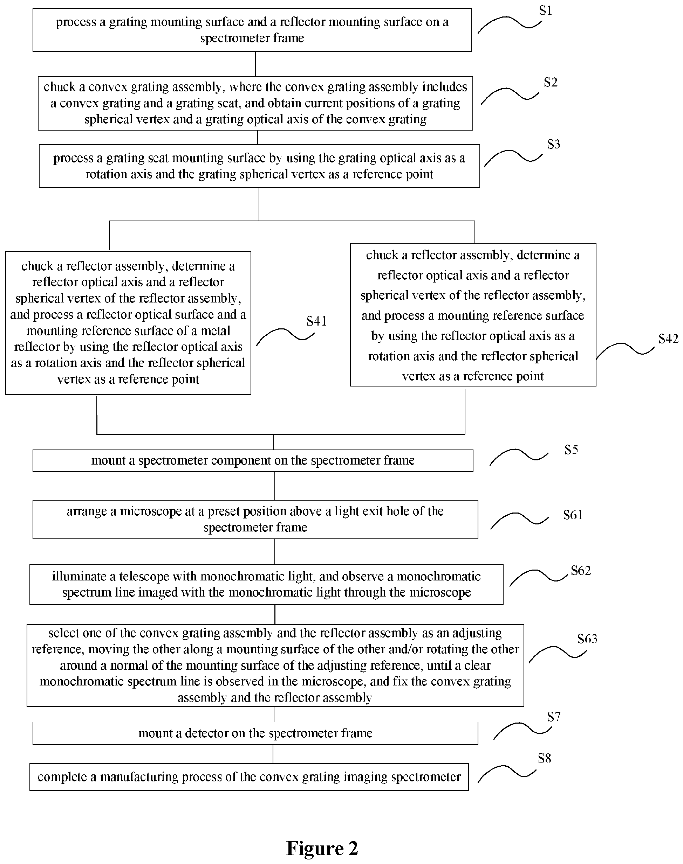

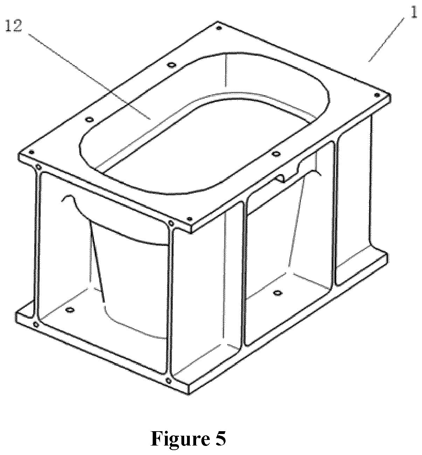

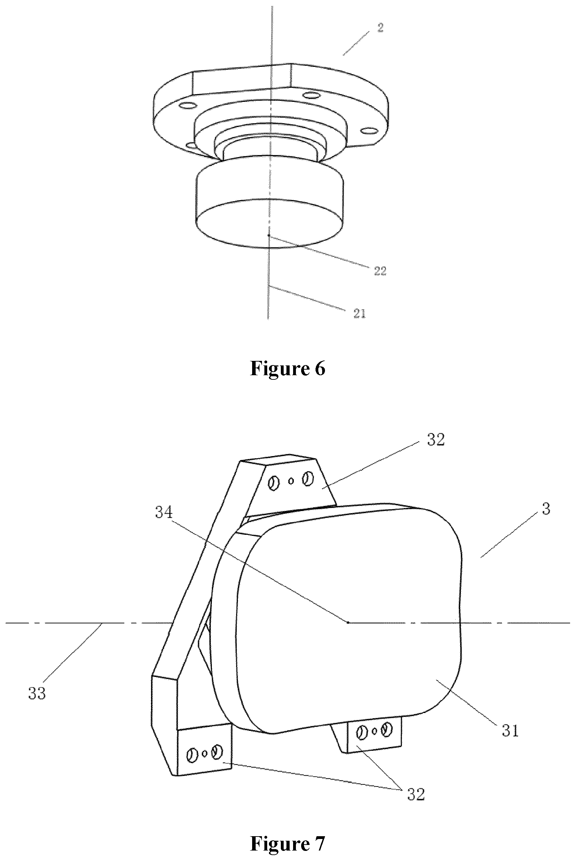

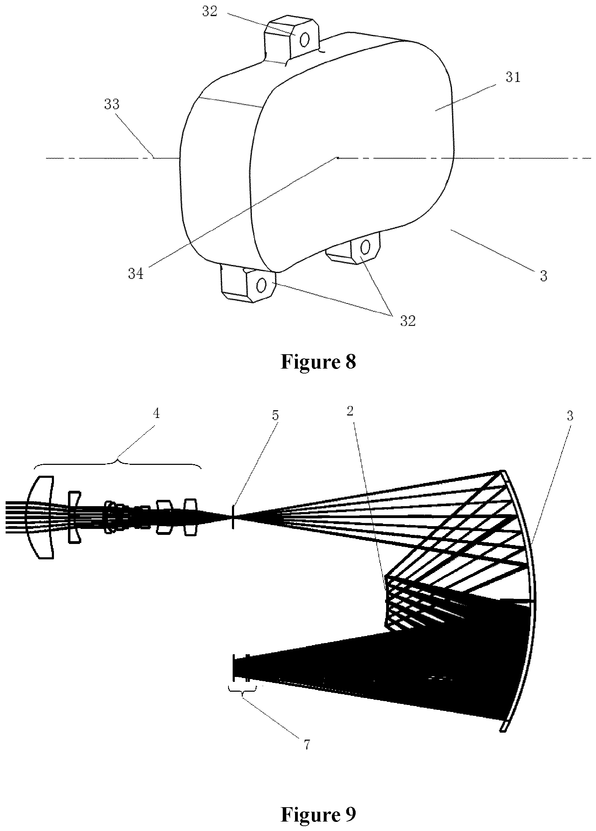

Referring to Figures 1 to 9, Figure 1 is a flow chart according to a first embodiment of the present disclosure; Figure 2 is a flow chart according to a second embodiment of the present disclosure; Figure 3 is a cross-sectional view of a convex grating imaging spectrometer; Figure 4 is a structural schematic diagram of an upper end surface of a spectrometer frame; Figure 5 is a structural schematic diagram of a lower end surface of a spectrometer frame; Figure 6 is a structural schematic diagram of a convex grating assembly; Figure 7 is a structural schematic diagram of a glass reflector; Figure 8 is a structural schematic diagram of a metal reflector; and Figure 9 is a schematic diagram of adjusting a position of a convex grating or a reflector.

A structure of a convex grating imaging spectrometer is shown in Figure 3. The convex grating imaging spectrometer includes: a spectrometer frame 1, a convex grating assembly 2, a reflector assembly 3, a telescope assembly 4, a slit assembly 5, a light reflector assembly 6, and a detector assembly 7. The light is irradiated into the slit assembly 5 through the telescope assembly 4, and then reflected to a reflector by the light reflector assembly 6. The incident light reflected by the reflector enters the convex grating, and is dispersed into light of different frequencies by the convex grating, which is then imaged in the detector assembly 7 after being reflected by the reflector.

The method for manufacturing a convex grating imaging spectrometer according to the present disclosure includes following steps S1 to S8.

Step S1, process a grating mounting surface and a reflector mounting surface on the spectrometer frame 1.

A structure of the spectrometer frame 1 is shown in Figures 4 and 5. The grating mounting surface and the reflector mounting surface are respectively located on two opposite end surfaces of the spectrometer frame 1, which are parallel to each other. The convex grating assembly 2 and the reflector assembly 3 are respectively mounted on the grating mounting surface and the reflector mounting surface. Specifically, the grating mounting surface and the reflector mounting surface may be processed to a design value and within an allowable tolerance range by a high-precision multi-axis single-point diamond. In practice, a user may also use equipment such as a grinder or a milling machine to process the grating mounting surface and the reflector mounting surface, which is not limited herein.

Step S2, chuck the convex grating assembly 2, where the convex grating assembly 2 includes a convex grating and a grating seat, and obtain current positions of a grating spherical vertex 22 and a grating optical axis 21 of the convex grating.

The convex grating assembly 2 is chucked. A structure of the convex grating assembly 2 is shown in Figure 6, which includes the convex grating and the grating seat. The positions of the grating spherical vertex 22 and the grating optical axis 21 of the convex grating are obtained. A rotation axis of a processing device is made coincident with the optical axis 21, and a position of a grating seat mounting surface is determined according to the grating spherical vertex 22, where a distance between the grating seat mounting surface and the grating spherical vertex 22 meets a design value. The grating seat mounting surface is an end surface facing the convex grating.

Step S3, process the grating seat mounting surface by using the grating optical axis 21 as a rotation axis and the grating spherical vertex 22 as a reference point.

The spectrometer frame 1 is provided with a convex grating mounting hole 11, the convex grating assembly 2 is mounted in the convex grating mounting hole 11, and the grating seat mounting surface fits the grating mounting surface. The grating seat mounting surface is processed by using the grating optical axis 21 as the rotation axis and the grating spherical vertex 22 as the reference point; thus the perpendicularity of the grating seat mounting surface to the grating optical axis 21, a distance between the grating seat mounting surface and the grating spherical vertex 22, and the flatness of the grating seat mounting surface all conform to design values and an allowable tolerance range.

Step S4, chuck the reflector assembly 3, determine a reflector optical axis and a reflector spherical vertex of the reflector assembly 3, and process the reflector assembly 3 by using the reflector optical axis 33 as a rotation axis and the reflector spherical vertex 34 as a reference point.

The spectrometer frame 1 is provided with a reflector mounting hole 12, the reflector assembly 3 is mounted in the reflector mounting hole 12, and a mounting reference surface 32 of the reflector assembly 3 fits a reflector mounting surface. During processing of the reflector assembly 3, the reflector assembly 3 is first chucked on the processing device, and then the reflector optical axis and the reflector spherical vertex of the reflector assembly are determined. The mounting reference surface 32 of the reflector assembly 3 is processed by using the reflector optical axis 33 as the rotation axis and the reflector spherical vertex 34 as the reference point. Thus the flatness of the mounting reference surface, the perpendicularity of the mounting reference surface to the reflector optical axis , and a distance between the mounting reference surface and the reflector spherical vertex 34 all conform to design values and an allowable tolerance range.

Step S5, mount a spectrometer component on the spectrometer frame 1.

The spectrometer component includes a telescope assembly 4, a slit assembly 5 and a light reflector assembly 6. The light reflector assembly 6 is provided with a light reflector mounting seat and a light-reflector. As shown in Figure 3, the light reflector mounting seat is mounted above a light entrance hole 13, and fits the grating mounting surface. The telescope assembly 4 is connected to the light reflector mounting seat, and the slit assembly 5 is located between the telescope assembly 4 and the light reflector mounting seat.

Step S6, adjust and fix a position of the convex grating assembly 2 or the reflector assembly 3.

After the mounting is completed, the position of the convex grating assembly 2 or the reflector assembly 3 is adjusted, to produce a clear image in the convex grating imaging spectrometer. A principle of the adjustment is shown in Figure 8. First, one of the convex grating and the reflector assembly is fixed, a microscope is set above a light exit hole 14 of the spectrometer frame 1, and light illuminates into the convex grating imaging spectrometer through the telescope assembly 4. Then a position of the other one of the convex grating and the reflector assembly is adjusted. When a clear image is observed in the microscope, it indicates that the position adjustment operation is completed, and the convex grating assembly 2 and the reflector assembly 3 are fixed.

Step S7, mount the detector assembly 7 on the spectrometer frame 1.

The detector assembly 7 is mounted above the light exit hole 14 of the spectrometer frame 1.

Step S8, complete a manufacturing process of the convex grating imaging spectrometer.

In this embodiment, the mounting reference surface for the grating seat mounting surface is processed by using the grating optical axis 21 of the convex grating as the rotation axis and the grating spherical vertex 22 as the reference point; the reflector assembly is processed by using the optical axis 33 of the reflector as the rotation axis and the reflector spherical vertex 34 as the reference point. Thus it is ensured that the convex grating assembly 2 is parallel to the reflector assembly 3 when they are mounted on the spectrometer frame 1, and that a distance between a reflector optical surface 31 and the convex grating meets a design value. During adjusting of the position of the convex grating assembly 2 or the reflector assembly 3, only two translational degrees of freedom parallel to the reflector mounting surface and an angle parallel to this plane need to be adjusted. The degree of freedom of the optical elements is reduced, thereby reducing the difficulty of assembly.

In addition, the reflector assembly includes a metal reflector and a glass reflector. In a case that the convex grating imaging spectrometer is provided with a metal reflector, both the mounting reference surface and the reflector optical surface 31 of the reflector assembly 3 need to be processed. Specifically, processing the reflector assembly 3 specifically includes a step S41 of processing a reflector optical surface 31 and a mounting reference surface 32 of the metal reflector.

During the processing, the metal reflector is processed by using the reflector optical axis 33 as the rotation axis and the reflector spherical vertex 34 as the reference point. Since the optical structure of the metal reflector is based on the same reference, it is ensured that the flatness of the mounting reference surface 32 of the metal reflector and its perpendicularity to the reflector optical axis conforms to a design value and an allowable tolerance range; thus the required adjustment of degree of freedom and the difficulty of assembly are lowered.

In a case that the convex grating imaging spectrometer is provided with a glass reflector, merely a mounting reference surface on the reflector mounting seat 32 needs to be processed. Specifically, processing the reflector assembly 3 specifically includes a step S42 of processing the mounting reference surface.

Before processing, it is necessary to determine the reflector spherical vertex 34 and the reflector optical axis 33, to ensure that the reflector optical axis 33 coincides with the rotation axis of the processing device. The mounting reference surface 32 is determined according to the reflector spherical vertex 34, and then the mounting reference surface 32 is processed. Thus the flatness of the mounting reference surface 32 of the reflector assembly 3 and its perpendicularity to the reflector optical axis conforms to a design value and an allowable tolerance range.

In this embodiment, the reflector and the convex grating are processed based on the same reference, and the design reference, processing reference, and assembly reference are unified, thereby reducing the degree of freedom required for adjustment. Furthermore, there is no need for an adjusting spacer, and the assembly and adjustment time can be greatly shortened while ensuring the accuracy requirements, thereby satisfying requirements for industrialized mass production.

In one embodiment, the adjusting and fixing a position of the convex grating assembly 2 or the reflector assembly 3 includes following steps S61 to S63.

Step S61, arrange a microscope at a preset position above a light exit hole 14 of the spectrometer frame 1.

The microscope is configured to receive reflected light from the reflector, and whether the adjustment of the convex grating assembly 2 or the reflector assembly 3 is in place is determined according to an image formed by the reflected light in the microscope. Reference may be made to related art for the selection of the preset position, which will not be described herein. ·

Step S62, illuminate the telescope assembly 4 with monochromatic light, and observe a monochromatic spectrum line imaged with the monochromatic light through the microscope.

The monochromatic light is incident along a direction parallel to an axis of the telescope assembly 4, and an image formed by the monochromatic light can be observed through the microscope.

Step S63, select one of the convex grating assembly 2 and the reflector assembly 3 as an adjusting reference, moving the other along a mounting surface of the other and/or rotating the other around a normal of the mounting surface, until a clear monochromatic spectrum line is observed in the microscope, and fix the convex grating assembly 2 and the reflector assembly 3.

In a specific implementation of the present disclosure, the convex grating assembly 2 is selected as the adjustment reference, and is fixed on the spectrometer frame 1. Then the reflector assembly 3 is moved along the reflector mounting surface and/or the reflector assembly 3 is rotated along the normal of the mounting surface. The image formed by the monochromatic light is observed through the microscope until a clear single monochromatic spectrum line is observed in the microscope, and the reflector assembly 3 is fixed.

The step of installing the detector assembly 7 on the spectrometer frame 1 includes: pre-mounting the detector assembly 7 on the spectrometer frame 1; illuminating a target in front of the telescope assembly 4 with monochromatic light of different wavelengths; adjusting a position of the detector assembly 7 in a case that the target is not clearly imaged on the detector assembly 7, and repeating the step of illuminating the target in front of the telescope assembly 4 with monochromatic light of different wavelengths; and fixing the detector assembly 7 in a case that the target is clearly imaged on the detector assembly. The target may specifically be a collimator target or any other target simulator capable of simulating the luminous characteristics of a working target of the imaging spectrometer.

After the convex grating imaging spectrometer is assembled, it is often necessary to verify its use effect. Therefore, after fixing the detector assembly 7, the method further includes: performing imaging verification on the convex grating imaging spectrometer.

In this embodiment, during adjusting of the convex grating assembly 2 or the reflector assembly 3, monochromatic light is selected for adjustment, so that a reference compensation mirror is not required in the adjustment process, thereby reducing the adjustment difficulty and the adjustment cost.

It should be noted that, the relationship terminologies such as "first", "second" and the like are only used herein to distinguish one entity or operation from another, rather than to necessitate or imply that the actual relationship or order exists between the entities or operations.

The method for manufacturing a convex grating imaging spectrometer according to the present disclosure is described in details above. Specific examples are used in this application to illustrate the principle and implementation of the present disclosure. The description of the above examples is merely to help understand the method and key idea of the present disclosure. It should be pointed out that for those of ordinary skill in the art, several improvements and modifications can be made to the present disclosure without departing from the principle of the present disclosure, and these improvements and modifications also fall within the protection scope of the present disclosure.

## Claims

1. A method for manufacturing a convex grating imaging spectrometer, the method comprising:
processing a grating mounting surface and a reflector mounting surface on a spectrometer frame (1);
chucking a convex grating assembly (2), wherein the convex grating assembly (2) comprises a convex grating and a grating seat, and obtaining current positions of a grating spherical vertex (22) and a grating optical axis (21) of the convex grating;
processing a grating seat mounting surface by using the grating optical axis (21) as a rotation axis and the grating spherical vertex (22) as a reference point;
chucking a reflector assembly (3), determining a reflector optical axis and a reflector spherical vertex of the reflector assembly (3), and processing the reflector assembly (3) by using the reflector optical axis (33) as a rotation axis and the reflector spherical vertex (34) as a reference point;
mounting a spectrometer component on the spectrometer frame (1);
adjusting and fixing a position of the convex grating assembly (2) or the reflector assembly (3);
mounting a detector assembly (7) on the spectrometer frame (1); and
completing a manufacturing process of the convex grating imaging spectrometer.

2. The method according to claim 1, wherein in a case that the reflector assembly is a metal reflector, the processing the reflector assembly (3) comprises: processing a reflector optical surface (31) and a mounting reference surface (32) of the metal reflector.

3. The method according to claim 2, wherein in a case that the reflector assembly is a glass reflector, the processing the reflector assembly comprises: processing a mounting reference surface (32) of the glass reflector.

4. The method according to claim 3, wherein the spectrometer component comprises: a telescope assembly (4), a slit assembly (5), and a light reflector assembly (6), and the light reflector assembly (6) comprises a light reflector mounting seat and a light reflector located in the light reflector mounting seat for reflecting incident light toward the reflector assembly (3).

5. The method according to any one of claims 1 to 4, wherein the adjusting and fixing a position of the convex grating assembly or the reflector assembly comprises:
arranging a microscope at a preset position above a light exit hole of the spectrometer frame (1);
illuminating a telescope assembly (4) with monochromatic light, and observing a monochromatic spectrum line imaged with the monochromatic light through the microscope; and
selecting one of the convex grating assembly (2) and the reflector assembly (3) as an adjusting reference, and moving the other along a mounting surface of the other and/or rotating the other around a normal of a mounting surface of the adjusting reference, until a clear monochromatic spectrum line is observed in the microscope, and fixing the convex grating assembly (2) and the reflector assembly (3).

6. The method according to claim 5, wherein the mounting a detector assembly (7) on the spectrometer frame (1) comprises:
pre-mounting the detector assembly (7) on the spectrometer frame (1);
illuminating a target in front of the telescope assembly (4) with monochromatic light of different wavelengths;
adjusting a position of the detector assembly (7) in a case that the target is not clearly imaged on the detector assembly (7), and repeating the step of illuminating the target in front of the telescope assembly (4) with monochromatic light of different wavelengths; and
fixing the detector assembly (7) in a case that the target is clearly imaged on the detector assembly (7) under illumination of all the monochromatic light of different wavelengths.

7. The method according to claim 6, wherein the target is a collimator target.

8. The method according to claim 7, wherein after fixing the detector assembly (7), the method further comprises: performing imaging verification on the convex grating imaging spectrometer.
